# FASCICULE DE BREVET EUROPEEN

(11) **EP 4 199 411 B1**
(45) Date de publication et mention de la délivrance du brevet: **26.06.2024**
(21) Numéro de dépôt: 22209558.0
(22) Date de dépôt: 25.11.2022
(51) Int. Cl.: H04L 9/00

(54) **PROCÉDÉ DE DÉTERMINATION D'UNE AUTORISATION DE MISE EN UVRE D'UNE RESSOURCE COMPOSITE, CHAÎNE DE BLOCS, DISPOSITIFS ET PROGRAMME CORRESPONDANTS**
VERFAHREN ZUR BESTIMMUNG EINER AUTORISIERUNG ZUR IMPLEMENTIERUNG EINER VERBUNDRESSOURCE, BLOCKCHAIN, VORRICHTUNGEN UND PROGRAMM DAFÜR
METHOD FOR DETERMINING AN AUTHORIZATION FOR IMPLEMENTING A COMPOSITE RESOURCE, CORRESPONDING BLOCKCHAIN, DEVICES AND PROGRAM

(30) Priorité: 14.12.2021 FR 2113516
(43) Date de publication de la demande: 21.06.2023
(73) Titulaire: Orange, 92130 Issy-les-Moulineaux (FR)
(72) Inventeur: BERTIN, Emmanuel, 92326 CHATILLON (FR); HATIN, Julien, 92326 CHATILLON (FR)
(74) Mandataire: Vidon Brevets & Stratégie

(56) Documents cités:
- PÉREZ VÍCTOR ET AL: "Cost Analysis of Smart Contracts Via Parametric Resource Analysis", 13 janvier 2021 (2021-01-13), ARXIV.ORG, PAGE(S) 7 - 31, XP047575461, * abrégé * * Chapitre 1: "Introduction" * * Chapitre 4: "Defining Resources and Cost Models" * * Chapitre 5: "Performing the Resource Analysis" *
- MOHANTA BHABENDU KUMAR ET AL: "An Overview of Smart Contract and Use Cases in Blockchain Technology", 2018 9TH INTERNATIONAL CONFERENCE ON COMPUTING, COMMUNICATION AND NETWORKING TECHNOLOGIES (ICCCNT), IEEE, 10 juillet 2018 (2018-07-10), pages 1-4, XP033421928, DOI: 10.1109/ICCCNT.2018.8494045

## Description

### 1. Domaine

La divulgation se rapporte à la mise en oeuvre de ressources. La divulgation se rapporte plus particulièrement à la mise en oeuvre de ressources matérielles ou logicielles. Dans ce qui suit, on considère qu'une ressource matérielle ou logicielle est en mesure de réaliser une action ou de rendre un service. Un objet de la présente divulgation est de proposer une méthode de mise en oeuvre de ces ressources qui préserve les droits des propriétaires des ressources, particulièrement dans une configuration ou de multiples ressources doivent être mises en oeuvre de manière concomitante ou imbriquée.

### 2. Art Antérieur

Avec l'avènement de systèmes composés d'éléments logiciels et matériels provenant de constructeurs et/ou d'éditeurs différents, la question des droits d'accès aux composants d'un système ou d'un objet se pose. Il est en effet très fréquent qu'un appareil ou qu'un système comprenne, utilise ou met en oeuvre de nombreux composants qui ne sont pas fabriqués directement ou indirectement par le fabriquant de l'appareil ou du système. Il est également fréquent que ces composants soient fournis avec un certain nombre de conditions opérationnelles de mise en oeuvre. Or la détermination d'une autorisation de mise en oeuvre d'un composant n'est pas chose aisée. Des problématiques de ce type se posent dans de nombreux cas de figure. On peut citer par exemple les cas suivants :
- Mise à jour d'un élément logiciel dans un système global (par exemple un micrologiciel d'un téléphone ou d'un dispositif électronique quelconque) : quel est l'élément logiciel à utiliser, pour quel terminal ou pour quel dispositif électronique, dans quel contexte ;
- Autorisation de remplacement de composants physiques ou logiciels dans un objet (comme par exemple un terminal de communication, une voiture ou un avion) : quel composant utiliser, dans quelle limite, pour quel usage ?
- Analyse d'une licence logicielle à utiliser (CC, MIT, GNU, GPL, ...) : quelle licence utiliser, comment cette licence se combine-t-elle avec d'autres licences, etc.

La généralisation de l'ensemble de ces problématiques peut être perçue comme une problématique de contrôle d'accès à une ressource. Plus particulièrement, cette problématique générale consiste à déterminer et à qualifier les droits qu'un système possède pour la mise en oeuvre d'une ressource intégrée au sein de ce système. En d'autres termes, il est possible de généraliser ces problématiques à la possession des droits suffisants pour réaliser la mise en oeuvre d'une ressource : le système multi-composants est-il en possession des droits nécessaires à la mise en oeuvre d'une action donnée sur une ressource donnée.

Dans l'état actuel de la technique, cette problématique est, d'une part, généralement adressée de manière centralisée, en amont, par le concepteur du système multi-composants ; et, d'autre part, fait l'objet d'une multiplicité d'accords bilatéraux entre le concepteur du système et les différents concepteurs ou éditeurs de composants à intégrer. Ces accords ont pour conséquence l'intégration, à la conception du système, des conditions dans lesquelles les composants peuvent, ou ne peuvent pas, être mis en oeuvre ou implémentés au sein de ce système.

Néanmoins, il est de plus en plus fréquent que les fabricants de systèmes ou de composants souhaitent, ou soient contraints de, fournir en temps réel des fonctionnalités à la demande. Une telle fourniture temps réel rend le modèle statique et centralisé de l'art antérieur de plus en plus difficile à implémenter.

V. Pérez et al: "Cost Analysis of Smart Contracts Via Parametric Resource Analysis", expose le calcul du coût d'exécution, en termes d'une ressource composite, d'un contrat intelligent.

B. Mohanta et al: "An Overview of Smart Contract and Use Cases in Blockchain Technology", expose de l'arrière-plan technologique au sujet des contrats intelligents.

### 3. Résumé

Les inventeurs ont conservé les problématiques existantes à l'esprit lors de la conception et la mise au point de la solution proposée. Plus particulièrement, la technique décrite a été conçue pour permettre l'obtention de données relatives à la mise en oeuvre d'une ressource composite. Plus particulièrement, il est proposé un procédé de détermination d'une autorisation de mise en oeuvre d'une ressource composite, ladite ressource composite comprenant au moins deux ressources, ledit procédé étant mis en oeuvre au sein d'une chaîne de blocs. Un tel procédé comprend :
- une étape de réception, par un contrat intelligent de la chaîne de blocs, appelé contrat composite, d'une requête en provenance d'une entité requérante désirant obtenir une autorisation de mise en oeuvre de la ressource composite ;
- une étape d'obtention, par le contrat composite, d'au moins une adresse d'au moins un contrat intelligent au sein d'une chaîne de blocs, ledit au moins un contrat intelligent étant associé à au moins une ressource comprise dans ladite ressource composite ; et, pour chaque contrat intelligent :
- une étape de transmission d'une requête d'autorisation de mise en oeuvre de la ressource associée à ce contrat intelligent ; et
- une étape de réception d'un résultat fourni par ce contrat intelligent ;
- une étape de compilation des résultats en provenance dudit au moins un contrat intelligent délivrant un résultat représentatif de l'autorisation de mise en oeuvre de la ressource composite.

Ainsi, il est possible d'obtenir une autorisation de mise en oeuvre d'une ressource en temps réel, de manière fiable, ouverte et sécurisée.

Selon une caractéristique particulière, préalablement à l'étape de réception de la requête, une étape d'insertion, au sein d'au moins une chaîne de blocs, dudit au moins un contrat intelligent et du contrat composite adressant ledit au moins un contrat intelligent.

Ainsi, il est possible de définir simplement des ressources composites qui peuvent comprendre une pluralité de ressources, qui agglomèrent elles-mêmes d'autres ressources, l'ensemble des contrats intelligents associés à ces différentes ressources unitaires ou agglomérées, pouvant se situer dans des chaînes de blocs différentes, étant accessibles par l'intermédiaire de leurs adresses respectives au sein de ces chaînes de blocs.

Selon une caractéristique particulière, la requête en provenance de l'entité requérante comprend au moins une donnée représentative d'une action que l'entité requérante souhaite que la ressource composite mette en oeuvre.

Ainsi, en fonction de l'action requise par l'entité requérante, les contrats intelligents associées aux ressources comprises dans la ressource composite peuvent déterminer si oui ou non ils acceptent la requête de mise en oeuvre de l'entité requérante.

Selon une caractéristique particulière, la requête en provenance de l'entité requérante comprend au moins une donnée représentative d'une donnée de certification.

Ainsi, il est possible d'authentifier l'entité requérante

Selon une caractéristique particulière, le procédé comprend en outre une étape d'insertion, au sein de la chaîne de blocs du contrat composite, d'une transaction comprenant ladite donnée de certification.

Ainsi, il est possible de tracer, pour une utilisation ou une revue ultérieure, la matérialité de la requête transmise par l'entité requérante

Selon une caractéristique particulière, la donnée de certification est le résultat d'une fonction cryptographique appliquée sur une clé symétrique Ka et sur une donnée DCP en possession de l'entité requérante.

Selon une caractéristique particulière, le procédé comprend, postérieurement à l'obtention, par l'entité requérante, du résultat représentatif de l'autorisation de mise en oeuvre de la ressource composite, une étape de transmission, par l'entité requérante, d'une requête de mise en oeuvre à ladite ressource composite, tenant compte du résultat représentatif de l'autorisation de mise en oeuvre de la ressource composite.

Selon une caractéristique particulière, le procédé comprend, postérieurement à une transmission du résultat représentatif de l'autorisation de mise en oeuvre de la ressource composite à l'entité requérante :
- une étape de réception, par la chaîne de blocs, en provenance de la ressource composite, d'une requête d'obtention d'une donnée d'autorisation de mise en oeuvre ;
- et, lorsqu'une telle donnée d'autorisation de mise en oeuvre est présente au sein de la chaîne de blocs, une étape de transmission de la donnée d'autorisation de mise en oeuvre à la ressource composite.

Selon un autre aspect, l'invention se rapporte également à une chaîne de blocs comprenant des moyens de détermination d'une autorisation de mise en oeuvre d'une ressource composite, ladite ressource composite comprenant au moins deux ressources. Une telle chaîne comprend :
- des moyens de réception, par un contrat intelligent de la chaîne de blocs, appelé contrat composite, d'une requête en provenance d'une entité requérante désirant obtenir une autorisation de mise en oeuvre de la ressource composite ;
- des moyens d'obtention, par le contrat composite, d'au moins une adresse d'au moins un contrat intelligent au sein d'une chaîne de blocs, ledit au moins un contrat intelligent étant associé à au moins une ressource comprise dans ladite ressource composite ; et, pour chaque contrat intelligent :
- des moyens de transmission d'une requête d'autorisation de mise en oeuvre de la ressource associée à ce contrat intelligent ; et
- des moyens de réception d'un résultat fourni par ce contrat intelligent ;
- des moyens de compilation des résultats en provenance dudit au moins un contrat intelligent délivrant un résultat représentatif de l'autorisation de mise en oeuvre de la ressource composite.

L'invention se rapporte également à tous noeud d'une chaîne de blocs comprenant tout ou partie des caractéristiques pouvant être mises en oeuvre au sein de la chaîne de blocs selon les revendications précédentes.

Selon une implémentation préférée, les différentes étapes des procédés selon la présente divulgation sont mises en oeuvre par un ou plusieurs logiciels ou programmes d'ordinateur, comprenant des instructions logicielles destinées à être exécutées par un processeur de données d'un terminal d'exécution selon la présente technique et étant conçu pour commander l'exécution des différentes étapes des procédés, mis en oeuvre au niveau d'un terminal de communication, d'un serveur distant et/ou d'une chaîne de blocs, dans le cadre d'une répartition des traitements à effectuer et déterminés par un code source scripté ou un code compilé.

En conséquence, la présente technique vise aussi des programmes, susceptibles d'être exécutés par un ordinateur ou par un processeur de données, ces programmes comportant des instructions pour commander l'exécution des étapes des procédés tel que mentionnés ci-dessus.

Un programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

La présente technique vise aussi un support d'informations lisible par un processeur de données, et comportant des instructions d'un programme tel que mentionné ci-dessus.

Le support d'informations peut être n'importe quelle entité ou terminal capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple un support mobile (carte mémoire) ou un disque dur ou un SSD.

D'autre part, le support d'informations peut être un support transmissible tel qu'un signal électrique ou optique, qui peut être acheminé via un câble électrique ou optique, par radio ou par d'autres moyens. Le programme selon la présente technique peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

Selon un exemple de réalisation, la présente technique est mise en oeuvre au moyen de composants logiciels et/ou matériels. Dans cette optique, le terme "module" peut correspondre dans ce document aussi bien à un composant logiciel, qu'à un composant matériel ou à un ensemble de composants matériels et logiciels.

Un composant logiciel correspond à un ou plusieurs programmes d'ordinateur, un ou plusieurs sous-programmes d'un programme, ou de manière plus générale à tout élément d'un programme ou d'un logiciel apte à mettre en oeuvre une fonction ou un ensemble de fonctions, selon ce qui est décrit ci-dessous pour le module concerné. Un tel composant logiciel est exécuté par un processeur de données d'une entité physique (terminal, serveur, passerelle, set-top-box, routeur, etc.) et est susceptible d'accéder aux ressources matérielles de cette entité physique (mémoires, supports d'enregistrement, bus de communication, cartes électroniques d'entrées/sorties, interfaces utilisateur, etc.).

De la même manière, un composant matériel correspond à tout élément d'un ensemble matériel (ou hardware) apte à mettre en oeuvre une fonction ou un ensemble de fonctions, selon ce qui est décrit ci-dessous pour le module concerné. Il peut s'agir d'un composant matériel programmable ou avec processeur intégré pour l'exécution de logiciel, par exemple un circuit intégré, une carte à puce, une carte à mémoire, une carte électronique pour l'exécution d'un micrologiciel (firmware), etc.

Chaque composante du système précédemment décrit met bien entendu en oeuvre ses propres modules logiciels.

Les différents modes de réalisation mentionnés ci-dessus sont combinables entre eux pour la mise en oeuvre de la présente technique.

L'étendue de la protection couverte par ce brevet est définie par les revendications.

### 4. Dessins

D'autres buts, caractéristiques et avantages de la divulgation apparaîtront plus clairement à la lecture de la description suivante, donnée à titre de simple exemple illustratif, et non limitatif, en relation avec les figures, parmi lesquelles :
- [Fig.1] représente le procédé de de mise en oeuvre d'une ressource composite par l'intermédiaire d'une chaîne de blocs ;
- [Fig.2] représente une hiérarchie indicative de contrats intelligents selon la divulgation ;
- [Fig.3] représente une architecture physique simplifiée d'un système dans lequel les procédés précédemment décrits peuvent être mis en oeuvre.

### 5. Description d'un exemple de réalisation

### 5.1. Rappels du principe

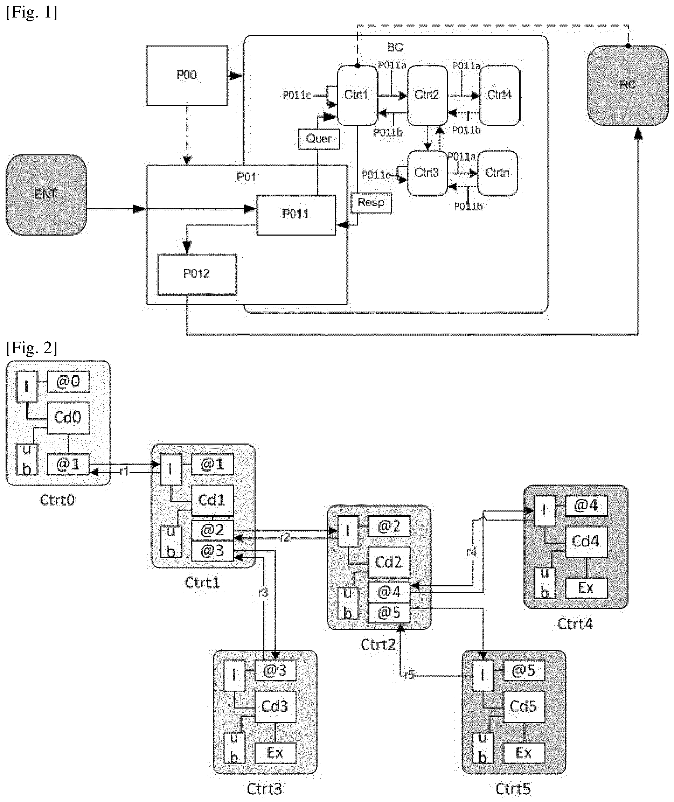

Comme exposé précédemment, la technique proposée par les inventeurs consiste à effectuer une compilation de données de traitement de ressources, cette compilation ayant pour conséquence la délivrance d'une donnée compilée d'autorisation (ou d'absence d'autorisation) de mise en oeuvre d'une ressource comprenant/utilisant plusieurs ressources. Dans ce qui suit on nomme ressource composite, une ressource mettant en oeuvre plusieurs ressources. Une ressource composite est composée de plusieurs ressources, qui peuvent elle-même être des ressources composites ou des ressources unitaires. Comme indiqué précédemment, il se pose un problème d'obtention, en temps réel, des conditions dans lesquelles une ressource composite peut être mise en oeuvre. La technique qui a été développée par les inventeurs permet une telle obtention de manière sûre, certaine et transparente. Pour atteindre ce résultat, une chaîne de blocs (ou base de données répartie) est utilisée pour stocker d'une part des conditions de mise en oeuvre des ressources unitaires et d'autre part des conditions de mise en oeuvre des ressources composites. La [Fig.1] explicite les étapes générales de la méthode proposée.

Dans une première phase (P00), dite d'initialisation, des contrats intelligents (« smart contract », Ctrt1,...., Ctrtn) sont créés, au sein de la chaîne de blocs (BC), pour la ressource composite dont on souhaite gérer les droits. Comme exposé précédemment, cette ressource peut être une ressource matérielle (i.e. un composant physique installé au sein d'un dispositif) ou une ressource logicielle (i.e. un composant logiciel installé au sein d'une application ou d'un programme) ou une ressource mixte combinant ressource matérielle et ressource logicielle.

La création du contrat intelligent est effectuée par l'entité détentrice de la ressource unitaire, c'est-à-dire par l'entité propriétaire de la ressource et/ou l'entité gestionnaire des droits de la ressource unitaire : plusieurs contrats intelligents sont donc créés (Ctrt4,...., Ctrtn), typiquement un par ressource unitaire. Puis des contrats intelligents sont créés pour combiner plusieurs contrats intelligents de ressources unitaires (Ctrt1, Ctrt2, Ctrt3) : il s'agit de contrats dit d'agglomération par commodité. Ces contrats d'agglomération qui combinent plusieurs ressources sont particuliers en ce qu'ils comprennent, dans leur structure, une fonction de compilation qui est utilisée pour compiler les résultats d'autorisation reçus de la part des contrats intelligents qu'ils référencent (i.e. les contrats intelligents des sous ressources qu'ils agglomèrent). Une fois cette initialisation effectuée, le contrat intelligent Ctrt1 de la ressource composite RC (appelé par commodité « contrat composite ») est accessible dans la chaîne de blocs. Il est public lorsque la chaîne de blocs est publique. Le contrat composite Ctrt1 est un contrat d'agglomération particulier (de niveau 0) permettant d'adresser la ressource composite dans son ensemble.

Puis, ultérieurement, un procédé de mise en oeuvre (P01) de la ressource composite est exécuté, au sein de la chaîne de blocs, lorsqu'une entité (par exemple un dispositif connecté, une application, etc.) souhaite mettre en oeuvre la ressource composite ; ce procédé, du point de vue de l'entité requérante, comprend deux phases : une phase d'interrogation (P011), dans laquelle l'entité requiert (Quer), auprès du contrat composite (Ctrt1), une autorisation de mise en oeuvre pour la ressource composite référencée par le contrat et une phase de mise en oeuvre (P012) de la ressource composite (RC), qui intervient en fonction de la réponse (Resp) fournie par le contrat composite (Ctrt1). Du point de vue de la chaîne de blocs, ce procédé comprend principalement la phase d'interrogation (P011), qui débute avec la réception de la requête d'interrogation (Quer) et se termine (au moins partiellement) avec la fourniture de la réponse (Resp) à l'entité requérante.

Ainsi, pour un dispositif connecté, par exemple, le procédé consiste à obtenir l'autorisation de mise en oeuvre des composants (logiciels ou matériels) qui le composent, par exemple dans une situation donnée. À titre d'exemple purement illustratif, un véhicule connecté souhaite, à la demande de son utilisateur, mettre en oeuvre une réserve d'énergie à sa disposition dans une situation donnée. Le véhicule connecté initie la mise en oeuvre du procédé d'obtention d'autorisation auprès de la chaîne de blocs afin d'obtenir (ou non) cette autorisation. À titre d'un autre exemple, une application s'exécutant sur un terminal de communication souhaite mettre en oeuvre une fonction cryptographique particulière d'un élément de sécurisation (SE, « Secure Elément ») embarqué au sein du terminal de communication, l'élément de sécurisation embarquant une pluralité de fonctions unitaires. Le terminal de communication initie la mise en oeuvre du procédé d'obtention d'autorisation auprès de la chaîne de blocs afin d'obtenir (ou non) cette autorisation.

Le procédé mis en oeuvre au sein de la chaîne de blocs consiste, pour un contrat composite (Ctrt1), associée à la ressource composite (RC), à :
- recevoir (P011) une requête (Quer) en provenance de l'entité requérante ENT (qui souhaite mettre en oeuvre la ressource composite) ;

puis, récursivement et/ou itérativement :
   - à recevoir (P011b) les résultats (resn) de requêtes d'autorisation (reqn) de mise en oeuvre qu'il transmet (P011a), directement ou indirectement, à l'ensemble des contrats intelligents (Ctrt2,... Ctrtn), (qui sont eux même associés à des ressources composites ou à des ressources unitaires)
puis à :
   - compiler (P011c) ces résultats (resn) pour fournir un résultat (Resp) à l'entité requérante ENT.

Pour plus de clarté, les étapes sont numérotées de manière identique sur la figue 1, bien que ces étapes soient effectivement différentes d'un contrat vers un autre. Ainsi, il est possible d'obtenir, de manière automatique, transparente, décentralisée et en temps réel, une autorisation de mise en oeuvre de la ressource composite qui respecte les dispositions prises par le fabricant, le propriétaire ou l'éditeur de chaque ressource composant la ressource composite.

Une fois en possession de ce résultat, l'entité requérante peut requérir la mise en oeuvre (P012) de la ressource composite (quand le résultat reçu permet cette mise en oeuvre bien évidemment). Par exemple, cette phase (P012) peut comprendre une étape de transmission, par l'entité requérante, d'une requête de mise en oeuvre de l'action à destination de la ressource composite, cette requête de mise en oeuvre comprenant, en paramètre, l'action qui a été validée ou autorisée par la chaîne de blocs, ainsi que le résultat reçu (resp) et une donnée d'identification de l'entité requérante. À réception de cette requête de mise en oeuvre, la ressource composite met en oeuvre l'action demandée (et éventuellement retourne un résultat de mise en oeuvre à l'entité requérante). Optionnellement, la ressource composite adresse ensuite son contrat composite au sein de la chaîne de blocs et requiert l'inscription d'une transaction au sein de la chaîne de blocs pour l'entité requérante et pour l'action mise en oeuvre par la ressource composite.

### 5.2. Création et identification des ressources dans une chaîne de blocs

Préalablement à la mise en oeuvre d'une ressource composite, on suppose que cette ressource composite à fait l'objet d'une inscription dans une chaîne de blocs. Cette ressource composite, comme indiqué précédemment, comprend au moins deux ressources, ces deux ressources pouvant, au choix, soit être des ressources unitaires et/ ou composites. Ainsi une ressource composite peut par exemple comprendre deux ressources composites et une ressource unitaire.

Dans un exemple purement illustratif, une ressource composite « caméra connectée » peut comprendre une ressource unitaire « capteur CCD » et une ressource composite « module de prise de vue », cette ressource composite comprenant par exemple une ressource « module de prise de vue SDR » et une ressource « module de prise de vue HDR ». Selon l'invention, comme résumé précédemment, ces différentes ressources font l'objet d'une inscription dans la chaîne de blocs. Plus particulièrement, dans un exemple de réalisation particulier, ces ressources sont individuellement inscrites au sein de la chaîne de blocs sous la forme d'un contrat intelligent associé à chacune des ressources. Dans l'exemple précédent, on introduit dans la chaîne de blocs, un contrat intelligent pour le « module de prise de vue HDR », un contrat intelligent pour le « module de prise de vue SDR », un contrat intelligent pour le « module de prise de vue », un contrat intelligent pour le « capteur CCD » et un contrat intelligent pour la « caméra connectée ». C'est le détenteur des droits/fabricant qui insère le contrat intelligent relatif à la ressource au sein de la chaîne de blocs. Ce contrat intelligent associée à la ressource comprend d'une part un identifiant de la ressource et d'autre part des conditions de mise en oeuvre de cette ressource.

Ces conditions de mise en oeuvre de la ressource peuvent se présenter soit sous la forme d'un code exécutable (code compilé, intermédiaire ou code scripté par exemple) et/ou une interface de communication (directe ou indirecte) avec le propriétaire et/ou le fabricant de la ressource, ou encore une interface de communication avec la ressource elle-même en fonction de modes de réalisation et des conditions de mise en oeuvre opérationnelles.

Le contrat intelligent associé à une ressource (composite ou unitaire) expose au moins une interface normalisée, nommée « Authorized », qui, lorsqu'elle est invoquée, transmet les conditions de mise en oeuvre de la ressource à laquelle le contrat intelligent se réfère pour une action passée en paramètre de cette invocation. Pour une ressource composite, le contrat intelligent comprend en outre au moins une fonction d'interrogation des contrats intelligents associées aux ressources intégrées au sein de la ressource composite.

Ainsi, en reprenant l'exemple précédent, le fabricant du « module de prise de vue HDR » insère, dans la chaîne de bloc, un contrat intelligent comprenant une identification de la ressource et une interface de requêtage d'autorisation « Authorized », qui prend en paramètre une valeur d'action, pour laquelle il souhaite obtenir une autorisation.

Le fabricant du « module de prise de vue » (qui peut être le même que le fabricant du module de prise de vue HDR) insère, dans la chaîne de bloc, un contrat intelligent comprenant une identification de la ressource et une interface de requêtage d'autorisation « Authorized », qui prend en paramètre une valeur d'action.

À l'issue de cette pluralité d'insertions de contrats au sein de la chaîne de blocs, chaque propriétaire/fabricant des ressources dispose, pour les contrats qu'ils ont insérés, d'une adresse attachée à ce contrat, au sein de la chaîne de blocs.

Ce contrat peut être associé à l'élément auquel il est attaché en y inscrivant un identifiant unique comme un numéro de série. Les contrats disposent des références de chacune des ressources sous la forme d'une liste chainée.

Ce contrat intelligent possède au moins une fonction permettant de définir les conditions d'usage. Cette fonction est un espace réservé au propriétaire de la ressource et qui peut y inscrire le code qu'il souhaite. On peut citer par exemple :
- Vérifier dans le cas d'une licence le respect des termes de sa licence dans les autres ressources ;
- Interroger un service tiers pour vérifier les droits d'utilisation (par exemple un paiement) ;
- L'émission d'un événement pour préparer une utilisation particulière.

Cette fonction peut être dépendante d'une transaction en jeton (« token ») cryptographique.

Cette fonction prend comme argument au moins l'adresse de l'appelant. Cette fonction peut émettre un jeton d'autorisation. Ces jetons d'autorisation sont créés en passant en paramètres une adresse identifiant le propriétaire et une adresse identifiant le contrat intelligent associé à la ressource.

### 5.3. Mise en oeuvre d'une ressource composite

Lorsque l'ensemble des contrats intelligents associés aux ressources sont créés et adressés au sein de la chaîne de blocs, on dispose donc au sein de cette chaîne de blocs d'une hiérarchie de contrats, qui peut être vue, pour une ressource composite donnée, comme un arbre de contrats qui comprend des adresses vers des noeuds, ces noeuds pouvant eux-mêmes comprendre d'autres adresses vers d'autres noeuds (en mode récursif), et ainsi de suite.

Il est dès lors possible de mettre en oeuvre la ressource composite associée à cette hiérarchie de contrat en exécutant le procédé suivant.

### 5.3.1. Procédé de mise en oeuvre général

Le procédé mis en oeuvre est le suivant :
Une entité (i.e. une application, un micrologiciel, un dispositif, etc.) souhaite mettre en oeuvre une ressource composite (cette mise en oeuvre peut consister en une simple utilisation de la ressource -par exemple utilisation de la caméra connectée dont l'exemple est présenté précédemment-, ou encore en une utilisation d'une fonction particulière de la ressource, par exemple pour la mise en oeuvre d'une fonction spécifique de la ressource, dans une situation donnée - par exemple utilisation d'un surcroit de puissance dans un véhicule ou utilisation d'un processeur d'une carte graphique à des fins particulières). Quoi qu'il en soit, cette entité interroge, dans la chaîne de blocs, par l'intermédiaire de l'interface de requêtage d'autorisation « Authorized », le contrat intelligent de niveau 0 qui est référencé pour cette ressource composite.

Ce contrat intelligent de niveau 0 comprend, comme indiqué précédemment, une fonction d'interrogation, codée, qui dispose de la pluralité d'adresses des composants de niveau inférieur. Cette pluralité d'adresses des composants de niveau inférieur peut par exemple se présenter sous la forme d'une liste chainée ou bien encore par exemple sous la forme d'une structure récursive, ou bien toute autre structure adéquate. Par ailleurs, la pluralité d'adresses des composants de niveau inférieur peut ne comprendre qu'une seule et unique adresse.

Quoi qu'il en soit, pour chaque adresse référencée au sein de ce contrat intelligent de niveau 0, le procédé comprend une étape d'invocation de l'interface de requêtage d'autorisation « Authorized » associé. L'invocation de cette interface provoque, au niveau du contrat intelligent invoqué de niveau 1, un traitement qui est :
- soit un traitement identique à celui du contrat de niveau 0, si la ressource associée au contrat intelligent de niveau 1 est également une ressource composite (il s'agit ainsi d'une mise en oeuvre récursive) ;
- soit un traitement consistant simplement à obtenir un résultat de demande d'autorisation relatif à l'action passée en paramètre de la requête d'autorisation.

On décrit, en relation avec la [Fig.2], un exemple purement illustratif de chainage de contrats intelligents au sein d'une (ou de plusieurs) chaîne(s) de blocs. En effet, selon la présente technique, les contrats peuvent être répartis dans plusieurs chaînes de blocs différentes. Cela ne change cependant pas la mise en oeuvre du procédé décrit.

Dans cet exemple, le contrat intelligent de niveau 0 comprend, au sein d'un bloc de la chaîne de blocs, une interface de requêtage d'autorisation « Authorized » (I), une adresse (@0), un code exécutable (Cd0), une adresse (@1) d'un contrat intelligent de niveau 1 et une donnée de mise à jour de ce contrat intelligent (ub). La présence de cette adresse (@1) du contrat intelligent de niveau 1 fait de ce contrat Ctrt0 un contrat se rapportant à une ressource composite. Lors de l'exécution de la demande d'autorisation, le code exécutable (Cd0) active l'interface de requêtage d'autorisation (I) du contrat intelligent de niveau 1, référencé à l'adresse (@1), en passant en paramètre la valeur de l'autorisation demandée : cette activation entraine l'obtention du résultat (r1) associé à cette valeur d'autorisation en provenance du contrat du contrat intelligent de niveau 1 Ctrt1 et la fourniture de ce résultat à l'entité appelante.

Le contrat intelligent de niveau 1 Ctrt1 comprend, au sein d'un bloc de la chaîne de blocs, une interface de requêtage d'autorisation « Authorized » (I), une adresse (@1), un code exécutable (Cd1), deux adresses (@2 et @3) de contrats intelligents de niveau 2 et une donnée de mise à jour de ce contrat intelligent (ub). Lors de l'exécution de la demande d'autorisation, le code exécutable (Cd1) active l'interface de requêtage d'autorisation (I) du contrat intelligent de niveau 2, référencé à l'adresse (@2) et active l'interface de requêtage d'autorisation (I) du contrat intelligent de niveau 2, référencé à l'adresse (@3), en passant en paramètre la valeur de l'autorisation demandée : ces deux activations entrainent l'obtention de deux résultats (r2, r3), l'un en provenance du contrat intelligent Ctrt 2 et l'autre en provenance du contrat intelligent Ctrt3. Comme le contrat intelligent de niveau 1 Ctrt1 active deux contrats intelligents de niveau 2 (Ctrt2 et Ctrt3), ces deux résultats (r2, r3) qui ont été obtenus sont compilés pour fournir le résultat r1 transmis au contrat intelligent Ctrt0.

Le contrat intelligent de niveau 2 Ctrt2 référençant également une ressource composite, comprend, au sein d'un bloc de la chaîne de blocs, une interface de requêtage d'autorisation « Authorized » (I), une adresse (@2), un code exécutable (Cd2), deux adresses (@4 et @5) de contrats intelligents de niveau 3 et une donnée de mise à jour de ce contrat intelligent (ub). Lors de l'exécution de la demande d'autorisation, le code exécutable (Cd2) active l'interface de requêtage d'autorisation (I) du contrat intelligent de niveau 3, référencé à l'adresse (@4) et active l'interface de requêtage d'autorisation (I) du contrat intelligent de niveau 3, référencé à l'adresse (@5) en passant en paramètre la valeur de l'autorisation demandée : ces deux activations entrainent l'obtention de deux résultats (r4, r5), l'un en provenance du contrat intelligent Ctrt4 et l'autre en provenance du contrat intelligent Ctrt5. Comme le contrat intelligent de niveau 2 Ctrt2 active deux contrats intelligents de niveau 3 (Ctrt4 et Ctrt5), ces deux résultats (r4, r5) qui ont été obtenus sont compilés pour fournir le résultat r2 transmis au contrat intelligent Ctrt1.

Le contrat intelligent Ctrt3 de niveau 2 comprend, au sein d'un bloc de la chaîne de blocs, une interface de requêtage d'autorisation « Authorized » (I), une adresse (@3), un code exécutable (Cd3), et une donnée de mise à jour de ce contrat intelligent (ub). Lors de l'exécution de la demande d'autorisation, le code exécutable (Cd3) effectue un calcul d'autorisation en fonction du paramètre passé à l'interface de requêtage d'autorisation et retourne un résultat. Pour ce faire, ce contrat intelligent Ctrt3 peut faire appel à une entité externe, au moyen d'une interface (Ex) adaptée. Cette entité externe peut, en fonction des variantes de réalisation, soit être la ressource unitaire à laquelle ce contrat intelligent Ctrt3 se rapporte, soit à une autre entité, qui est en charge de fournir au contrat intelligent Ctrt3 les données nécessaires à la compilation de la réponse qu'il doit transmettre au contrat intelligent requérant (en l'occurrence dans cet exemple le contrat Ctrt1).

Les contrats intelligents Ctrt4 et Ctrt5 de niveau 3 comprennent chacun, au sein d'un bloc de la chaîne de blocs, une interface de requêtage d'autorisation « Authorized » (I), une adresse (@4, @5), un code exécutable (Cd4, Cd5), et une donnée de mise à jour de ce contrat intelligent (ub). Lors de l'exécution de la demande d'autorisation, le code exécutable (Cd4, Cd5) effectue un calcul d'autorisation en fonction du paramètre passé à l'interface de requêtage d'autorisation et retourne un résultat. Pour ce faire, ces contrats intelligents Ctrt4 et Ctrt5 peuvent faire appel à une entité externe, au moyen d'une interface (Ex) adaptée. Cette entité externe peut, en fonction des variantes de réalisation, soit être la ressource unitaire à laquelle le contrat intelligent se rapporte, soit à une autre entité, qui est en charge de fournir au contrat intelligent les données nécessaires à la compilation de la réponse qu'il doit transmettre au contrat intelligent requérant (en l'occurrence dans cet exemple le contrat Ctrt2).

Comme explicité précédemment, le code exécutable des contrats intelligents, notamment ceux exposés dans l'exemple précédent, comprennent donc une fonction d'interrogation itérative et/ou récursive des contrats qu'ils référencent afin d'obtenir les résultats aux requêtes d'interrogation en provenance de ces contrats référencés et une fonction de compilation des résultats obtenus en provenance de ces contrats intelligents, qui permet au contrat de fournir lui-même un résultat à l'entité appelante. La fonction de compilation des résultats obtenus peut être différente pour chaque contrat, en fonction des conditions de mise en oeuvre opérationnelles. En quelque sorte, cette fonction de compilation remplit un rôle de décideur et elle matérialise le consensus de contrat intelligent. La fonction peut être une fonction de décision (min, max, vote majoritaire) et renvoyer un résultat booléen d'acceptation ou de refus à la requête transmise. Elle peut également prendre la forme d'une fonction renvoyant un résultat également composite, référençant les différentes acceptations et les différents refus d'autorisation de mise en oeuvre, de sorte à permettre à l'entité appelante (celle qui par exemple a invoqué le contrat intelligent de niveau 0) de décider de la manière de prendre en compte les résultats fournis par les différents contrats associés aux différentes ressources.

Lorsque l'entité appelante obtient le résultat en provenance du contrat intelligent qu'elle a invoqué dans la chaîne de blocs pour la ressource composite visée, elle conserve ce résultat et le transmet à la ressource composite au moment où elle souhaite la mettre en oeuvre pour l'action visée en paramètre de la requête initialement transmise au contrat intelligent de la ressource composite.

Ce résultat est ensuite transmis à la ressource composite en question au moment de la mise en oeuvre de la ressource composite par l'entité appelante. Plus particulièrement, le résultat peut par exemple prendre une valeur binaire qui est déterminée, au sein du contrat composite, en fonction de la fonction de décision implémentée au sein du contrat composite : lorsque la fonction est « min » il suffit qu'un seul contrat intelligent de l'ensemble de contrat donne l'autorisation pour que celle-ci soit accordée. Lorsque la fonction est « max » il faut que tous les contrats intelligents du contrat composite donnent leur accord. D'autres fonctions peuvent induire des résultats plus échelonnés, tels que « strictly reject », « minor reject », « accept », « strong accept ». Par exemple « strictly reject » peut-être un refus complet alors que « minor reject » peut être associé à une utilisation partielle d'une ressource.

En d'autres termes, en reprenant les exemples illustratifs fournis précédemment (pour la création et l'identification des ressources dans la chaîne de blocs), lorsque le contrat du module de prise de vue est invoqué par une partie appelante (i.e. par la caméra connectée qui souhaite mettre en oeuvre cette ressource « module de prise de vue » ou bien par un autre contrat), pour déterminer si une action à réaliser sur cette ressource est permise, la partie appelante invoque l'interface de requêtage d'autorisation « Authorized » et passe en paramètre l'action qu'elle souhaite réaliser (par exemple « use » pour une action d'utilisation de cette ressource). Comme il s'agit d'une ressource composite, selon la présente, le procédé de détermination de l'autorisation de mise en oeuvre récursif ou itératif décrit précédemment est exécuté par le contrat associé à la ressource composite.

Ainsi, lorsque le contrat du « module de prise de vue HDR » est invoqué par le contrat de la ressource composite « module de prise de vue », pour déterminer si l'action « use » à réaliser sur cette ressource est permise, le contrat de la ressource composite invoque l'interface de requêtage d'autorisation « Authorized » et passe en paramètre l'action « use » pour une action d'utilisation de la ressource. Le contrat du « module de prise de vue HDR » exécute son code et fournit le résultat associé au contrat de la ressource composite « module de prise de vue ».

De même, lorsque le contrat du « module de prise de vue SDR » est invoqué par le contrat de la ressource composite « module de prise de vue », pour déterminer si l'action « use » à réaliser sur cette ressource est permise, le contrat de la ressource composite invoque l'interface de requêtage d'autorisation « Authorized » et passe en paramètre l'action « use » pour une action d'utilisation de la ressource. Le contrat du « module de prise de vue SDR » exécute son code et fournit le résultat associé au contrat de la ressource composite « module de prise de vue ».

A réception des résultats en provenance des deux contrats (du « module de prise de vue HDR » et du « module de prise de vue SDR »), le contrat du « module de prise de vue » effectue une compilation de ces résultats et transmet le résultat compilé au contrat appelant (en l'occurrence le contrat intelligent de la ressource composite « caméra connectée ». La fonction de compilation du contrat permet de déterminer quel sera le résultat de la requête. Par exemple si la fonction de compilation du contrat « module de prise de vue » renvoie un booléen dont la valeur est « 1 », le contrat intelligent de la ressource composite « caméra connectée » comprend qu'il est en mesure d'utiliser la ressource « module de prise de vue » et ne se soucie pas de quelle technologie est effectivement utilisée. Au contraire, si la fonction de compilation du contrat « module de prise de vue » renvoie un double booléen (« 1 » pour le module SDR et « 0 » pour le module HDR), le contrat intelligent de la ressource composite « caméra connectée » comprend qu'il est en mesure d'utiliser la ressource « module de prise de vue », mais uniquement pour le « SDR » et peut donc lui-même transmettre cette information à l'entité appelante (i.e. la caméra connectée).

### 5.3.2. Autres caractéristiques et avantages

Dans une variante (ou complément) de mise en oeuvre de la technique décrite ci-dessus, la phase d'obtention d'une autorisation (P011) et la phase de mise en oeuvre de l'action (P012) sont modifiées de sorte à permettre une vérification de l'entité requérante.

Plus particulièrement, pour ce qui est de la phase d'interrogation (P011), la modification opérée tient dans la modification des paramètres de la requête transmise à la chaîne de blocs : les paramètres sont complétés et ils comprennent l'action requise par l'entité requérante (i.e. « use » par exemple, tel que décrit précédemment) et un paramètre d'identification (ou d'authentification en fonction des conditions de mise en oeuvre opérationnelles) de l'entité requérante. Dans un exemple de réalisation, ce paramètre est obtenu par l'application d'une fonction cryptographique FCrypt (par exemple AES, 3DES, Blowfish, Twofish, etc.) sur un couple formé d'une clé Ka, par exemple symétrique, fournie antérieurement à l'entité requérante et sur une donnée complémentaire DCP (un nombre aléatoire rnd, à disposition de l'entité requérante, ou toute autre donnée adéquate, comme une donnée de session par exemple, ou encore une donnée de contexte - i.e. position GPS de l'entité requérante, adresse IP, etc.). Ainsi, en plus de l'action, l'entité requérante fournit, au contrat composite, la donnée de certification :
C = FCrypt(Ka, DCP)

L'obtention de l'autorisation de la mise en oeuvre de l'action est effectuée comme précédemment présentée, en cascadant les demandes d'autorisation aux différents contrats unitaires ou aux contrats d'agglomération. En sus de ces étapes, le contrat composite insère, dans la chaîne de blocs, une transaction au nom de l'entité requérante avec la donnée de certification « C » reçue lors de l'interrogation.

La phase de mise en oeuvre de la ressource (P012), quant à elle, comprend, comme dans le cas précédemment décrit, une transmission, par l'entité requérante, d'une requête de mise en oeuvre à destination de la ressource composite. Cette requête comprend l'action requise par l'entité requérante (ainsi que les autres données précédemment décrites) et la donnée complémentaire DCP précédemment utilisée dans la phase d'interrogation.

À réception de cette requête, la ressource composite interroge son contrat composite au sein de la chaîne de blocs. Celui-ci, en fonction des paramètres transmis (notamment par exemple l'identifiant de l'entité requérante et optionnellement le résultat reçu (resp)), retourne un résultat d'acceptation ou de refus de mise en oeuvre comprenant notamment la donnée de certification « C » fournie par l'entité requérante dans la phase d'interrogation (P011). Optionnellement, le contrat composite inscrit une transaction (relative à ce résultat d'acceptation) dans la chaîne de blocs. La donnée de certification « C » peut également être obtenue par l'intermédiaire d'une simple interrogation de la chaîne de blocs par la ressource composite sans qu'elle ait besoin d'utiliser son contrat intelligent.

Postérieurement à cette interrogation, la ressource composite effectue également une vérification que l'entité requérante est bien ce qu'elle prétend être, à l'aide de sa possession de la clé symétrique Ka, et de la donnée complémentaire DCP fournie par l'entité requérante lors de la transmission de la requête de mise en oeuvre. La ressource composite calcule sa propre version de la donnée de certification et compare cette version avec la donnée de certification obtenue de la chaîne de blocs. Lorsque les deux données de certification sont identiques, la ressource composite exécute l'action qui lui a été demandée.

Ainsi, dans cette variante (ou ce complément) de mise en oeuvre, la ressource composite (dont le contrat intelligent est publié sur la chaîne de blocs), postérieurement à l'exécution d'une phase d'interrogation de demande d'autorisation telle que décrite précédemment (c'est-à-dire une demande d'autorisation reçue de la part de l'entité qui souhaite mettre en oeuvre la ressource), vérifie que cette autorisation a effectivement été accordée préalablement et confirme que cette autorisation a été accordée à la ressource composite, qui se faisant met en oeuvre l'action requise par l'entité requérante.

Concrètement, l'entité qui souhaite mettre en oeuvre la ressource a obtenu une réponse de la part du contrat intelligent de la ressource composite, tel que décrit précédemment. Dans la phase de mise en oeuvre, plutôt que de transmettre cette réponse avec sa requête d'action à destination de la ressource composite, l'entité transmet sa requête d'action accompagnée d'une donnée d'authentification qui lui est propre. A réception de cette requête, la ressource composite transmet, à son contrat intelligent de la chaîne de blocs, une requête dans le but de savoir si son contrat intelligent a autorisé l'entité. Cette transmission de cette requête est accompagnée de la donnée d'authentification de l'entité requérante. Le contrat intelligent de la ressource composite transmet sa réponse (par exemple une réponse booléenne) à destination de la ressource composite. La ressource composite vérifie alors le résultat obtenu et autorise ou non sa propre mise en oeuvre.

Pour la mise en oeuvre de l'action demandée, la ressource composite peut également se baser sur l'obtention de données externes à la chaîne de blocs. Il est ainsi possible de conditionner la mise en oeuvre d'une action particulière non seulement à partir de conditions issues de la composition de la ressources composite, telle qu'inscrite au sein de la chaîne de blocs, mais également de conditions externes à la chaîne de blocs.

Quels que soient les modes de réalisation, il est par ailleurs possible de limiter l'utilisation d'un contrat composite. Plus particulièrement on dispose, dans le contrat composite, d'un champ, initialement de valeur nulle. Lors de l'interrogation du contrat composite par une entité, la première action menée par le contrat composite est de vérifier la valeur de ce champ. Si celle valeur est nulle, le contrat s'exécute normalement, selon le procédé présenté précédemment. Si cette valeur n'est pas nulle, alors cette valeur est l'adresse à laquelle le contrat doit faire référence. Le contrat composite lance alors l'exécution d'un autre contrat (composite) se trouvant à cette adresse et le processus se poursuit tel qu'explicité précédemment. Cette méthode permet de neutraliser les contrats composites dans la chaîne de blocs elle-même. Plus particulièrement, lorsqu'un contrat composite ne peut plus être référencé, et dans la mesure où il n'est pas possible de modifier (le code exécutable de) ce contrat composite, cette mise à jour de valeur permet de ne plus permettre l'exécution de ce contrat.

### 5.4. Système de mise en oeuvre.

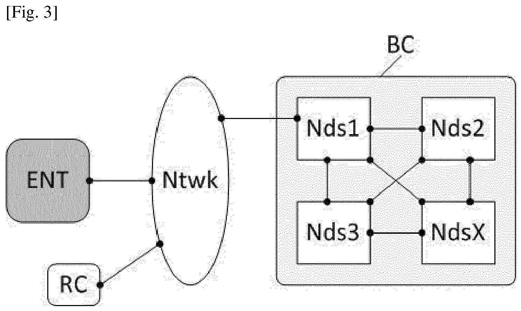

On présente, en relation avec la [Fig.3], un système de mise en oeuvre de la technique proposée par les inventeurs. Un tel système comprend une chaîne de bloc (BC) répartie dans une pluralité de noeuds (nds1, .... ndsX), au moins un de ces noeuds de la chaîne de bloc étant accessible par une entité requérante (ENT), par l'intermédiaire d'un réseau de communication (Ntwk). Un noeud se présente sous la forme d'un dispositif électronique calculatoire, disposant de ressources informatiques, notamment en termes de traitement pour maintenir au moins une portion de la chaîne de bloc, et pour pouvoir le cas échéant inscrire ou valider l'inscription de transactions au sein de cette chaîne de blocs, et notamment inscrire ou valider l'insertion de contrats et de jetons associés à la chaîne de blocs. Ainsi chaque noeud comprend un module électronique comprenant une mémoire, une unité de traitement équipée par exemple d'un microprocesseur, et pilotée par un programme d'ordinateur. L'entité appelante dispose également de modules techniques permettant l'obtention d'autorisation de mise en oeuvre. Elle comprend comprenant une mémoire, une unité de traitement équipée par exemple d'un microprocesseur, et pilotée par un programme d'ordinateur. Par ailleurs ces dispositifs comprennent également des moyens de communication se présentant par exemple sous la forme de composants réseaux (WiFi, 3G/4G/5G, filaire) qui permettent aux dispositifs de recevoir des données en provenance d'entités connectées à un ou plusieurs réseaux de communication et des transmettre des données traitées à de telles entités. Le système comprend également au moins une ressource composite (RC), qui peut éventuellement être intégrée au sein de l'entité, et qui est à même de communiquer, soit par ses propres moyens soit par des moyens partagés (par exemple avec l'entité requérante) avec un réseau de communication.

## Revendications

1. Procédé de détermination d'une autorisation de mise en oeuvre d'une ressource composite (RC), ladite ressource composite comprenant au moins deux ressources, ledit procédé étant mis en oeuvre au sein d'une chaîne de blocs et étant **caractérisé en ce qu'**il comprend :
- une étape de réception (P011), par un contrat intelligent (Ctrt1) de la chaîne de blocs, appelé contrat composite, d'une requête (Quer) en provenance d'une entité requérante ENT désirant obtenir une autorisation de mise en oeuvre de la ressource composite (RC) ;
- une étape d'obtention, par le contrat composite (Ctrt1), d'au moins une adresse (@2,...) d'au moins un contrat intelligent (Ctrt2,...) au sein d'une chaîne de blocs, ledit au moins un contrat intelligent (Ctrt2,...) étant associé à au moins une ressource comprise dans ladite ressource composite (RC) ; et, pour chaque contrat intelligent (Ctrt2,...) :
- une étape de transmission (P011a) d'une requête d'autorisation de mise en oeuvre de la ressource associée à ce contrat intelligent (Ctrt2,...) ; et
- une étape de réception (P011b) d'un résultat fourni par ce contrat intelligent (Ctrt2,...) ;
- une étape de compilation (P011c) des résultats en provenance dudit au moins un contrat intelligent (Ctrt2,...) délivrant un résultat (Resp) représentatif de l'autorisation de mise en oeuvre de la ressource composite (RC).

2. Procédé selon la revendication 1 **caractérisé en ce qu'**il comprend préalablement à l'étape de réception (P011) de la requête (Quer), une étape d'insertion (P00), au sein d'au moins une chaîne de blocs, dudit au moins un contrat intelligent (Ctrt2,...) et du contrat composite (Ctrt1) adressant ledit au moins un contrat intelligent (Ctrt2,...).

3. Procédé selon la revendication 1 **caractérisé en ce que** la requête (Quer) en provenance de l'entité requérante ENT comprend au moins une donnée représentative d'une action que l'entité requérante souhaite que la ressource composite mette en oeuvre.

4. Procédé selon la revendication 1 **caractérisé en ce que** la requête (Quer) en provenance de l'entité requérante ENT comprend au moins une donnée représentative d'une donnée de certification « C ».

5. Procédé selon la revendication 4 **caractérisé en ce qu'**il comprend en outre une étape d'insertion, au sein de la chaîne de blocs du contrat composite, d'une transaction comprenant ladite donnée de certification « C ».

6. Procédé selon la revendication 4 **caractérisé en ce que** la donnée de certification « C » est le résultat d'une fonction cryptographique appliquée sur une clé symétrique Ka et sur une donnée DCP en possession de l'entité requérante.

7. Procédé selon la revendication 1 **caractérisé en ce qu'**il comprend, postérieurement à l'obtention, par l'entité requérante ENT, du résultat (Resp) représentatif de l'autorisation de mise en oeuvre de la ressource composite (RC), une étape de transmission, par l'entité requérante, d'une requête de mise en oeuvre à ladite ressource composite (RC), tenant compte du résultat (Resp) représentatif de l'autorisation de mise en oeuvre de la ressource composite (RC).

8. Procédé selon la revendication 1 **caractérisé en ce qu'**il comprend, postérieurement à une transmission du résultat (Resp) représentatif de l'autorisation de mise en oeuvre de la ressource composite (RC) à l'entité requérante :
- une étape de réception, par la chaîne de blocs, en provenance de la ressource composite, d'une requête d'obtention d'une donnée d'autorisation de mise en oeuvre ;
- et, lorsqu'une telle donnée d'autorisation de mise en oeuvre est présente au sein de la chaîne de blocs, une étape de transmission de la donnée d'autorisation de mise en oeuvre à la ressource composite.

9. Chaîne de blocs comprenant des moyens de détermination d'une autorisation de mise en oeuvre d'une ressource composite (RC), ladite ressource composite comprenant au moins deux ressources, **caractérisée en ce qu'**elle comprend :
- des moyens de réception (P011), par un contrat intelligent (Ctrt1) de la chaîne de blocs, appelé contrat composite, d'une requête (Quer) en provenance d'une entité requérante ENT désirant obtenir une autorisation de mise en oeuvre de la ressource composite (RC) ;
- des moyens d'obtention, par le contrat composite (Ctrt1), d'au moins une adresse (@2,...) d'au moins un contrat intelligent (Ctrt2,...) au sein d'une chaîne de blocs, ledit au moins un contrat intelligent (Ctrt2,...) étant associé à au moins une ressource comprise dans ladite ressource composite (RC) ; et, pour chaque contrat intelligent (Ctrt2,...) :
- des moyens de transmission (P011a) d'une requête d'autorisation de mise en oeuvre de la ressource associée à ce contrat intelligent (Ctrt2,...) ; et
- des moyens de réception (P011b) d'un résultat fourni par ce contrat intelligent (Ctrt2,...) ;
- des moyens de compilation (P011c) des résultats en provenance dudit au moins un contrat intelligent (Ctrt2,...) délivrant un résultat (Resp) représentatif de l'autorisation de mise en oeuvre de la ressource composite (RC).

10. Produit programme d'ordinateur comprenant des instructions de code de programme pour la mise en oeuvre d'un procédé selon la revendication 1, lorsqu'il est exécuté par un processeur.

## Patentansprüche

1. Verfahren zur Bestimmung einer Autorisierung der Implementierung einer Verbundressource (RC), wobei die Verbundressource mindestens zwei Ressourcen umfasst, wobei das Verfahren in einer Blockchain implementiert wird und **dadurch gekennzeichnet ist, dass** es umfasst:
- einen Schritt des Empfangens (P011), durch einen intelligenten Vertrag (Ctrt1) der Blockchain, Verbundvertrag genannt, einer Anfrage (Quer), die von einer anfragenden Einheit ENT kommt, die eine Autorisierung der Implementierung der Verbundressource (RC) erhalten möchte;
- einen Schritt des Erhaltens, durch den Verbundvertrag (Ctrt1), mindestens einer Adresse (@2,...) mindestens eines intelligenten Vertrags (Ctrt2,...) in einer Blockchain, wobei der mindestens eine intelligente Vertrag (Ctrt2,...) mindestens einer in der Verbundressource (RC) enthaltenen Ressource zugeordnet ist; und, für jeden intelligenten Vertrag (Ctrt2,...):
- einen Schritt des Übertragens (POlla) einer Anfrage zur Autorisierung der Implementierung der diesem intelligenten Vertrag (Ctrt2,...) zugeordneten Ressource; und
- einen Schritt des Empfangens (POllb) eines von diesem intelligenten Vertrag (Ctrt2,...) übermittelten Ergebnisses;
- einen Schritt des Kompilierens (P011c) der von dem mindestens einen intelligenten Vertrag (Ctrt2,...) kommenden Ergebnisse, der ein Ergebnis (Resp) ausgibt, das für die Autorisierung der Implementierung der Verbundressource (RC) repräsentativ ist.

2. Verfahren nach Anspruch 1, **dadurch gekennzeichnet, dass** es vor dem Schritt des Empfangens (P011) der Anfrage (Quer) einen Schritt des Einfügens (P00), in die mindestens eine Blockchain, des mindestens einen intelligenten Vertrags (Ctrt2,...) und des Verbundvertrags (Ctrt1), der den mindestens einen intelligenten Vertrag (Ctrt2,...) adressiert, umfasst.

3. Verfahren nach Anspruch 1, **dadurch gekennzeichnet, dass** die von der anfragenden Einheit ENT kommende Anfrage (Quer) mindestens ein Datenelement umfasst, das für eine Handlung repräsentativ ist, die nach dem Wunsch der anfragenden Einheit von der Verbundressource implementiert werden soll.

4. Verfahren nach Anspruch 1, **dadurch gekennzeichnet, dass** die von der anfragenden Einheit ENT kommende Anfrage (Quer) mindestens ein Datenelement umfasst, das für ein Zertifizierungsdatenelement "C" repräsentativ ist.

5. Verfahren nach Anspruch 4, **dadurch gekennzeichnet, dass** es ferner einen Schritt des Einfügens, in die Blockchain des Verbundvertrags, einer Transaktion umfasst, die das Zertifizierungsdatenelement "C" umfasst.

6. Verfahren nach Anspruch 4, **dadurch gekennzeichnet, dass** das Zertifizierungsdatenelement "C" das Ergebnis einer kryptographischen Funktion ist, die auf einen symmetrischen Schlüssel Ka und auf ein Datenelement DCP angewandt wird, die im Besitz der anfragenden Einheit sind.

7. Verfahren nach Anspruch 1, **dadurch gekennzeichnet, dass** es nach dem Erhalten, durch die anfragende Einheit ENT, des Ergebnisses (Resp), das für die Autorisierung der Implementierung der Verbundressource (RC) repräsentativ ist, einen Schritt des Übertragens, durch die anfragende Einheit, einer Anfrage zur Implementierung der Verbundressource (RC) unter Berücksichtigung des Ergebnisses (Resp), das für die Autorisierung der Implementierung der Verbundressource (RC) repräsentativ ist, umfasst.

8. Verfahren nach Anspruch 1, **dadurch gekennzeichnet, dass** es nach einer Übertragung des Ergebnisses (Resp), das für die Autorisierung der Implementierung der Verbundressource (RC) repräsentativ ist, an die anfragende Einheit umfasst:
- einen Schritt des Empfangens, durch die Blockchain, einer von der Verbundressource kommenden Anfrage zum Erhalten eines Implementierungsautorisierungsdatenelements;
- und, wenn ein solches Implementierungsautorisierungsdatenelement in der Blockchain vorhanden ist, einen Schritt des Übertragens des Implementierungsautorisierungsdatenelements an die Verbundressource.

9. Blockchain, die Mittel zur Bestimmung einer Autorisierung der Implementierung einer Verbundressource (RC) umfasst, wobei die Verbundressource mindestens zwei Ressourcen umfasst, **dadurch gekennzeichnet, dass** sie umfasst:
- Mittel zum Empfangen (P011), durch einen intelligenten Vertrag (Ctrt1) der Blockchain, Verbundvertrag genannt, einer Anfrage (Quer), die von einer anfragenden Einheit ENT kommt, die eine Autorisierung der Implementierung der Verbundressource (RC) erhalten möchte;
- Mittel zum Erhalten, durch den Verbundvertrag (Ctrt1), mindestens einer Adresse (@2,...) mindestens eines intelligenten Vertrags (Ctrt2,...) in einer Blockchain, wobei der mindestens eine intelligente Vertrag (Ctrt2,...) mindestens einer in der Verbundressource (RC) enthaltenen Ressource zugeordnet ist; und, für jeden intelligenten Vertrag (Ctrt2,...):
- Mittel zum Übertragen (POlla) einer Anfrage zur Autorisierung der Implementierung der diesem intelligenten Vertrag (Ctrt2,...) zugeordneten Ressource; und
- Mittel zum Empfangen (POllb) eines von diesem intelligenten Vertrag (Ctrt2,...) übermittelten Ergebnisses;
- Mittel zum Kompilieren (P011c) der von dem mindestens einen intelligenten Vertrag (Ctrt2,...) kommenden Ergebnisse, die ein Ergebnis (Resp) ausgeben, das für die Autorisierung der Implementierung der Verbundressource (RC) repräsentativ ist.

10. Computerprogrammprodukt, das Programmcodeanweisungen umfasst, die bei seiner Ausführung durch einen Prozessor das Verfahren nach Anspruch 1 ausführen.

## Claims

1. Method for determining an authorization for implementing a composite resource (RC), said composite resource comprising at least two resources, said method being implemented within a blockchain and being **characterized in that** it comprises:
- a step of receiving (POll), by a smart contract (Ctrt1) of the blockchain, called composite contract, a request (Quer) from a requesting entity ENT wishing to obtain an authorization for implementing the composite resource (RC);
- a step of obtaining, by the composite contract (Ctrt1), at least one address (@2,...) of at least one smart contract (Ctrt2,...) within a blockchain, said at least one smart contact (Ctrt2,...) being associated with at least one resource comprised in said composite resource (RC); and, for each smart contract (Ctrt2,...)
- a step of transmitting (POlla) an authorization request for implementing the resource associated with this smart contact (Ctrt2,...) ; and
- a step of receiving (POllb) a result provided by this smart contact (Ctrt2,...) ;
- a step of compiling (P011c) the results from said at least one smart contract (Ctrt2,...) delivering a result (Resp) that is representative of the authorization for implementing the composite resource (RC).

2. Method according to Claim 1, **characterized in that** it comprises, prior to the step of receiving (POll) the request (Quer), a step of inserting (P00), within at least one blockchain, said at least one smart contract (Ctrt2,...) and the composite contract (Ctrt1) addressing said at least one smart contract (Ctrt2,...).

3. Method according to Claim 1, **characterized in that** the request (Quer) from the requesting entity ENT comprises at least one datum that is representative of an action that the requesting entity wants the composite resource to implement.

4. Method according to Claim 1, **characterized in that** the request (Quer) from the requesting entity ENT comprises at least one datum that is representative of a "C" certification datum.

5. Method according to Claim 4, **characterized in that** it further comprises a step of inserting, within the blockchain of the composite contract, a transaction comprising said "C" certification datum.

6. Method according to Claim 4, **characterized in that** the "C" certification datum is the result of a cryptographic function applied to a symmetric key Ka and to a datum DCP in the possession of the requesting entity.

7. Method according to Claim 1, **characterized in that** it comprises, after the requesting entity ENT has obtained the result (Resp) that is representative of the authorization for implementing the composite resource (RC), a step of the requesting entity transmitting an implementation request to said composite resource (RC), taking into account the result (Resp) that is representative of the authorization for implementing the composite resource (RC).

8. Method according to Claim 1, **characterized in that** it comprises, after transmitting the result (Resp) that is representative of the authorization for implementing the composite resource (RC) to the requesting entity:
- a step of the blockchain receiving from the composite resource a request to obtain a datum for authorizing implementation;
- and, when such a datum for authorizing implementation is present within the blockchain, a step of transmitting the datum for authorizing implementation to the composite resource.

9. Blockchain comprising means for determining an authorization for implementing a composite resource (RC), said composite resource comprising at least two resources, **characterized in that** it comprises:
- means for receiving (POll), by a smart contract (Ctrt1) of the blockchain, called composite contract, a request (Quer) from a requesting entity ENT wishing to obtain an authorization for implementing the composite resource (RC);
- means for obtaining, by the composite contract (Ctrt1), at least one address (@2,...) of at least one smart contract (Ctrt2,...) within a blockchain, said at least one smart contact (Ctrt2,...) being associated with at least one resource comprised in said composite resource (RC); and, for each smart contract (Ctrt2,...)
- means for transmitting (POlla) an authorization request for implementing the resource associated with this smart contact (Ctrt2,...) ; and
- means for receiving (POllb) a result provided by this smart contact (Ctrt2,... );
- means for compiling (P011c) the results from said at least one smart contract (Ctrt2,...) delivering a result (Resp) that is representative of the authorization for implementing the composite resource (RC).

10. Computer program product comprising program code instructions for implementing a method according to Claim 1 when it is executed by a processor.
